# EUROPEAN PATENT SPECIFICATION

(11) **EP 4 549 271 B1**
(45) Date of publication and mention of the grant of the patent: **27.05.2026**
(21) Application number: 23207249.6
(22) Date of filing: 01.11.2023
(51) Int. Cl.: B60W 30/08, B60Q 9/00, B60W 30/18, B60W 50/14

(54) **A VEHICLE SAFETY SYSTEM FOR AVOIDING ROAD DISTURBANCES**
FAHRZEUGSICHERHEITSSYSTEM ZUR VERMEIDUNG VON STRASSENSTÖRUNGEN
SYSTÈME DE SÉCURITÉ DE VÉHICULE POUR ÉVITER DES PERTURBATIONS ROUTIÈRES

(43) Date of publication of application: 07.05.2025
(73) Proprietor: Magna Electronics Sweden AB, 447 37 Vårgårda (SE)
(72) Inventor: THOR, Johan, 447 37 Vårgårda (SE)
(74) Representative: Westpatent AB

(56) References cited:
- WO-A1-2010/117308
- DE-A1- 102008 000 941
- DE-A1- 102021 200 572
- US-A1- 2022 055 632

## Description

The present invention relates to a vehicle safety system adapted to be mounted to an ego vehicle, where the vehicle safety system comprises a main control unit and a steering angle sensor connected to the main control unit.

Certain situations are related to a driver of a first vehicle noticing an obstacle on or at the road in the road lane where the first vehicle is travelling. That driver then turns to avoid the obstacle, and the first vehicle may then more or less leave its road lane and enter a neighboring road lane. A driver of second vehicle travelling behind the first vehicle may not notice the obstacle sufficiently quickly to successfully avoid the target. This may be due to the distance between the vehicles, weather conditions, time of day etc. Furthermore, traffic in the neighboring road lane may be disturbed by vehicles avoiding the obstacle.

US 2022/055632 A1 discloses a vehicle including a steering angle sensor and a controller configured to be electrically connected to the steering angle sensor that provides input to the controller for identifying a change amount in a steering angular speed of the vehicle. The controller can identify careless driving of the vehicle using steering angular speed changes in a first direction and in a second direction.

WO 2010/117308 A1 discloses a method for transmitting information on an expected behavior of a driver of an ego vehicle in response to a stimulus, and emitting a warning signal to the surrounding of the ego vehicle in case the expected future driving behavior is not a standard behavior.

DE 10 2021 200572 A1 discloses a vehicle collision avoidance device which determines a driver's steering intention ahead of all others in time even when a turn or direction indicator is not operated, and which can issue a collision warning, enabling avoidance of a collision with a time margin to do so.

DE 10 2008 000941 A1 discloses a method and a device for driver assistance. The method uses environmental sensors to record the vehicle's surroundings, and the driver's steering activity is recorded. By comparing the traffic situation recorded by the environmental sensors with the driver's steering activity, and if the driver's steering activity is determined to be implausible, the steering is intervened to ensure stable driving behavior of the vehicle.

It is therefore an object of the present invention to provide means and methods for alleviating institutions where one or more drivers perform evasive maneuvers to avoid one or more obstacles in the road lane.

This object is achieved by means of a vehicle safety system adapted to be mounted to an ego vehicle, where the vehicle safety system comprises a main control unit and a steering angle sensor connected to the main control unit, as defined by claim 1. The steering angle sensor is adapted to detect the rotational direction and angular velocity of steering wheel movements. The main control unit is adapted to determine an ego velocity of the ego vehicle, and to determine if a detected first angular velocity of a first steering wheel movement in a first rotational direction exceeds a first threshold when the ego velocity exceeds an ego velocity threshold. If that is the case, the main control unit is adapted to control at least one warning device to issue a warning that at least comprises an initial warning.

In this manner, safety systems and/or drivers of other vehicles can receive information about obstacles and take precautionary actions in dependence of how these vehicles are equipped and of the nature of the warning. Different types of warnings and different way to convey the warning will be described later. The precautionary actions are intended to avoid incidents and accidents and may for example include Automatic Emergency Brake, Automatic Emergency Steering and or audio/visual warnings to a driver.

Furthermore, the main control unit is adapted to determine if a detected second angular velocity of a second steering wheel movement in a second rotational direction, that is opposite the first rotational direction, exceeds a second threshold and falls below a third threshold within a predefined first time span. If that is the case, the main control unit is adapted to control said warning device to issue a first type warning, and if the detected second angular velocity exceeds the third threshold within the first time span, the main control unit is adapted to control the least one warning device to issue a second type warning. The second steering wheel movement follows the first steering wheel movement within a predetermined time.

This means that different types of warnings can be issued in dependence of the path of the ego vehicle when the ego vehicle is returning to the original path.

According to some aspects, the vehicle safety system further comprises a communication unit, where the main control unit is adapted to control the communication unit to issue the warning by means of wireless communication to at least one other vehicle.

This means that vehicle safety systems present in other vehicles can be informed of the issued warning and possibly receive information regarding the obstacle, enabling that vehicle safety systems to take necessary precautionary actions.

According to some aspects, the vehicle safety system comprises a navigation system adapted to determine a geographical position of the vehicle safety system. The communication unit is adapted to communicate issued warnings and the present determined geographical position to the remote server via a wireless link.

This means that the issued warnings can be collected, stored and processed at the remote server, and information regarding these warnings can be communicated in a certain relevant area. The communication can for example be directed to vehicle safety systems and can also be in the form of radio broadcasts.

According to some aspects, the main control unit is adapted to control ego vehicle lights to issue the warning by means of emission of lights and/or flashes.

This means that the warnings can be issued as emission of lights and/or flashes from existing vehicle lights, for example brake lights.

According to some aspects, the vehicle safety system comprises at least one environment detection system that is adapted to provide input to the main control unit. If said input is indicative of an approaching vehicle in an adjacent lane, the main control unit is adapted to control at least one warning device to issue a third type warning.

This object is also achieved by means of a vehicle according to claim 6, a remote server according to claim 7 and a method according to claim 9 that are associated with the above advantages.

### BRIEF DESCRIPTION OF THE DRAWINGS

The present disclosure will now be described more in detail with reference to the appended drawings, where:
- Figure 1: shows a schematic top view of an ego vehicle on a straight road;
- Figure 2: shows a schematic cut-open part of a vehicle with a vehicle safety system according to the present disclosure;
- Figure 3A-3B: show steering wheel movements;
- Figure 4: schematically illustrates a main control unit;
- Figure 5: schematically illustrates a computer program product;
- Figure 6: shows flowcharts for methods according to the present disclosure;
- Figure 7: schematically illustrates different warning types and associated thresholds; and
- Figure 8A-8B: schematically illustrate steering wheel angular velocity versus time.

### DETAILED DESCRIPTION

The inventive concept will now be described more fully hereinafter with reference to the accompanying drawings, in which certain embodiments of the inventive concept are shown.

This inventive concept may, however, be embodied in many different forms and should not be construed as limited to the embodiments set forth herein; rather, these embodiments are provided by way of example so that this disclosure will be thorough and complete, and will fully convey the scope of the inventive concept to those skilled in the art. Like numbers refer to like elements throughout the description. Any step or feature illustrated by dashed lines should be regarded as optional.

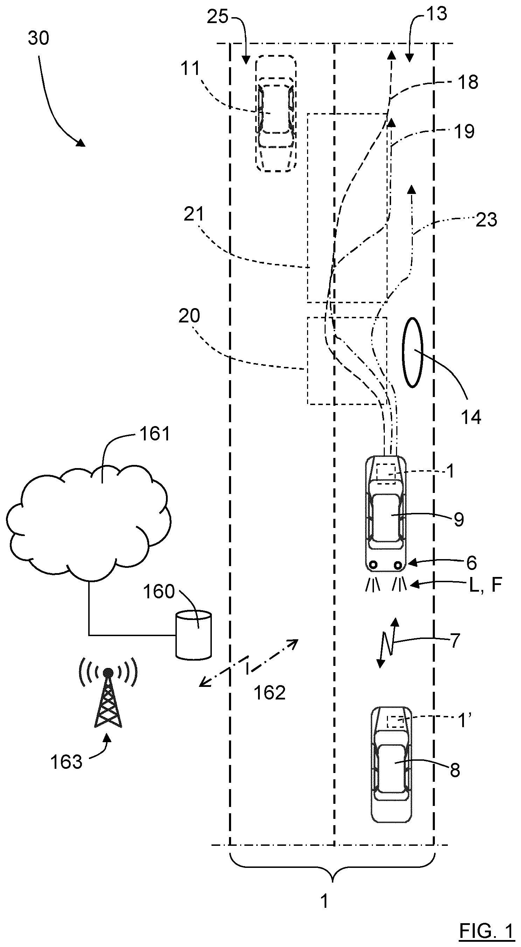

Figure 1 illustrates a top view of a road scenario where a first vehicle 9 in the form of an ego vehicle 9 is travelling in a road lane 13 and where there is an obstacle 14 ahead of the ego vehicle 9. The obstacle can be of any kind such as for example a hole in the road, water, oil spillage and objects such as tire debris, dropped vehicle parts, garbage and the like. Still-standing vehicles can also pose as such obstacles.

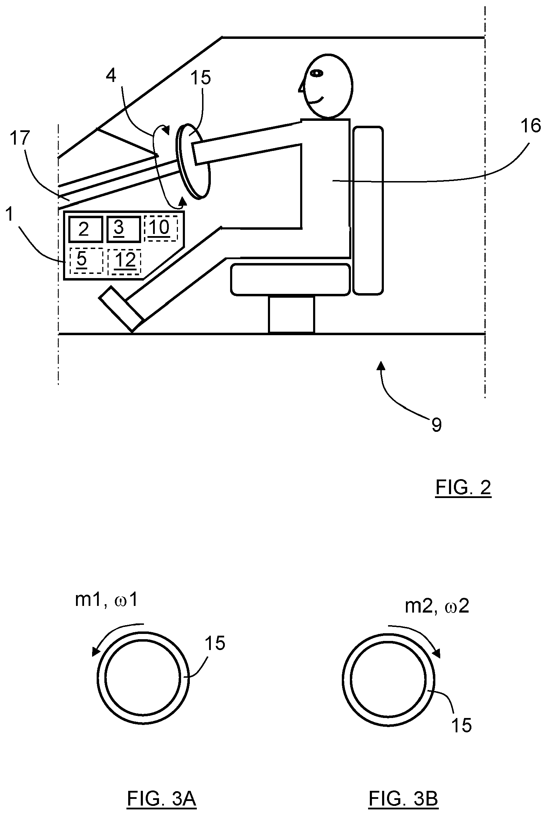

The present disclosure relates to a vehicle safety system 1 adapted to be mounted to the ego vehicle 9. With reference also to Figure 2 that shows a schematic cut-open part of the ego vehicle 9 with a driver 16, the vehicle safety system 1 comprises a main control unit 2 and a steering angle sensor 3 connected to the main control unit 2. As illustrated for an ego vehicle steering wheel 15 in Figure 3A and Figure 3B, the steering angle sensor 3 is adapted to detect the rotational direction ω1, ω2 and angular velocity v1, v2 of steering wheel movements 4. For this purpose, according to some aspects, the steering angle sensor 3 is adapted to detect movements of a steering column 17 connected to the steering wheel 15 in a previously well-known manner. According to some further aspects, in case of the steering wheel not being connected to a traditional steering column, the steering angle sensor 3 is adapted to detect steering angle movements from an equivalent of the steering column, including but not limited to the previously well-known Steer by Wire system.

According to the present disclosure, the main control unit 2 is adapted to determine an ego velocity ve of the ego vehicle 9, and to determine if a detected first angular velocity v1 of a first steering wheel movement m1 in a first rotational direction ω1 exceeds a first threshold th1 when the ego velocity ve exceeds an ego velocity threshold vth. If that is the case, the main control unit 2 is adapted to control at least one warning device 5, 6 to issue a warning wi, w1, w2, w3, where the warning comprises at least an initial warning wi. The warning may thus be constituted by one or more separate warnings.

According to some aspects, the ego velocity threshold vth is predetermined and set in a suitable manner such that for example parking maneuvers do not trigger issuance of any warnings. According to some aspects, the ego velocity threshold vth is in the range 0km/h to 70km/h and preferably in the range 30km/h to 50km/h.

If there is first steering wheel movement m1 in a first rotational direction ω1 exceeds a first threshold th1 this means that the path 18, 19 of the ego vehicle 9 is changed in certain manner to avoid an obstacle 14 as indicated with a first dashed rectangle 20 in Figure 1. By means of the present disclosure, the initial warning wi is issued, and according to some aspects other vehicles 8, 11 can both be noticed that there may be an obstacle in a certain road lane 13 and that one vehicle 9 has made an evasive maneuver.

In this manner, safety systems and/or drivers of the other vehicles 8, 11 can receive information about obstacles and take precautionary actions in dependence of how these vehicles are equipped and of the nature of the warning. Different types of warnings, both the initial warning and subsequent warnings, and different ways to convey the warning will be described later. The precautionary actions are intended to avoid incidents and accidents and may for example include Automatic Emergency Brake, Automatic Emergency Steering and or audio/visual warnings to a driver.

The initial warning wi is issued before further steering wheel movements in another rotational direction, and is thus not indicative of the nature of such steering wheel movements, but would be issued relatively quickly. The initial warning wi could according to some aspects be followed by one or more subsequent warnings as will be discussed below. The initial warning wi could according to some aspects also be an internal warning that is issued only within the vehicle safety system 1, the warning device being an internal function that for example can be comprised in the main control unit such that the initial warning wi is internally registered.

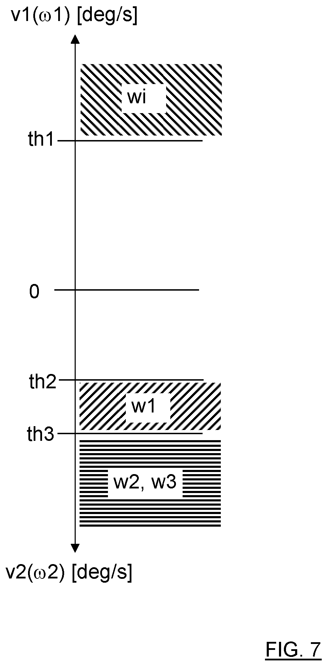

Furthermore, with reference also to Figure 7, the main control unit 2 is adapted to determine if a detected second angular velocity v2 of a second steering wheel movement m2 in a second rotational direction ω2, that is opposite the first rotational direction ω1, exceeds a second threshold th2 but falls below a third threshold th3 within a predefined first time span Δt1. If that is the case, the main control unit 2 is adapted to control the at least one warning device 5, 6 to issue a first type warning w1, otherwise if the detected second angular velocity v2 exceeds the third threshold th3 within the predefined first time span Δt1, the main control unit 2 is adapted to control the least one warning device 5, 6 to issue a second type warning w2, where the second steering wheel movement ω2 follows the first steering wheel movement ω1 within a predetermined time.

This means that different types of warnings can be issued in dependence of the path of the ego vehicle 9 when the ego vehicle is returning to the original path as indicated with a second dashed rectangle 21 in Figure 1.

If a detected second angular velocity v2 of a second steering wheel movement m2 in a second rotational direction ω2 falls below the third threshold th3, a first type warning w1 is issued. In this case, the ego vehicle follows a first path 18, indicated by a dashed line, with a relatively slow return to the original path.

Otherwise, if the detected second angular velocity v2 exceeds the third threshold th3, a second type warning w2 is issued. In this case, the ego vehicle follows a second path 19, indicated with a dash-dotted line, with a relatively quick return to the original path. The second path 19 may indicate that there may be an approaching vehicle 11 in an adjacent road lane 25 that forces a quick return, or reckless/mischievous driving that does not necessarily mean that there is an obstacle 14 present. There is a third path 23, indicated with a dash-double-dotted line, that indicates a relatively small obstacle 14 or reckless/mischievous driving. Examples of these paths 18, 19, 23 will be discussed more in detail later.

According to some aspects, the vehicle safety system 1 comprises a communication unit 5, where the main control unit 2 is adapted to control the communication unit 5 to issue the warning wi, w1, w2, w3 by means of wireless communication 7 to at least one other vehicle 8, 11. In order to be able to receive the warning wi, w1, w2, w3, said other vehicle must also be equipped with a wireless communication unit. This means that vehicle safety systems 1' present in other vehicles 8 can be informed of the issued warning and possibly receive information regarding the obstacle 14, enabling that vehicle safety systems 1' to take necessary precautionary actions as exemplified above.

According to some aspects, the vehicle safety system 1 comprises a navigation system 12 adapted to determine a geographical position of the vehicle safety system 1, where the communication unit 5 is adapted to communicate issued warnings wi, w1, w2, w3 and the present determined geographical position to the remote server 160 via a wireless link 162.

This means that the issued warnings wi, w1, w2, w3 can be collected, stored and processed at the remote server 160, and information regarding these warnings can be communicated in a certain relevant area. The communication can for example be directed to vehicle safety systems and can also be in the form of radio broadcasts. If acquired, information regarding the position and estimated extension of the obstacle 14 also can be communicated. Examples of this will be discussed later.

According to some aspects, the main control unit 2 is adapted to control ego vehicle lights 6 to issue the warning wi, w1, w2 by means of emission of lights L and/or flashes F. This means that the at least one warning device may be a device not only being adapted for issuing warnings in accordance with the present disclosure, but being adapted for other tasks as well.

This also means that the warnings can be issued as emission of lights L and/or flashes F from existing vehicle lights, for example brake lights 6. This can be done alone or in combination with communication of issued warnings via a communication unit as describe above.

According to some aspects, the vehicle safety system 1 comprises at least one environment detection system 10 that is adapted to provide input to the main control unit 2, and if said input is indicative of an approaching vehicle 11 in an adjacent lane, the main control unit 2 is adapted to control at least one warning device 5, 6 to issue a third type warning w3. The environment detection system 10 can for example be of the type radar, Lidar, and/or camera etc. The third type warning w3 can be of similar type as the second type warning w2, but the third type warning w3 is preferably indicative of a lowered risk for reckless/mischievous driving that does not necessarily mean that there is an obstacle 14 present.

It is also conceivable that the environment detection system 10 may be adapted to determine the presence of an obstacle 14, which also can constitute input for determining that the third type warning w3 is to be issued.

In the above examples, a subsequent warning w1, w2, w3 is issued when the driver 16 of the ego vehicle 9 has performed both a first steering wheel movement m1 in a first rotational direction ω1 and a second steering wheel movement m2 in a second rotational direction ω2, opposite the first rotational direction ω1. This subsequent warning follows the initial warning.

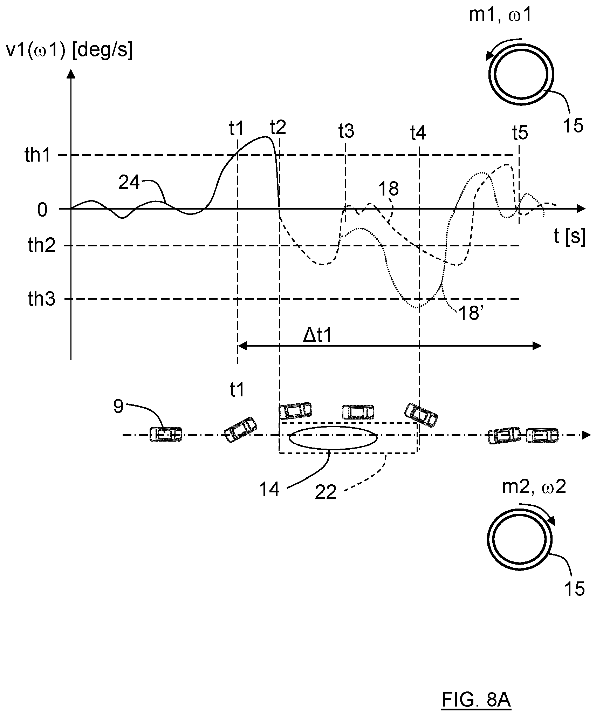

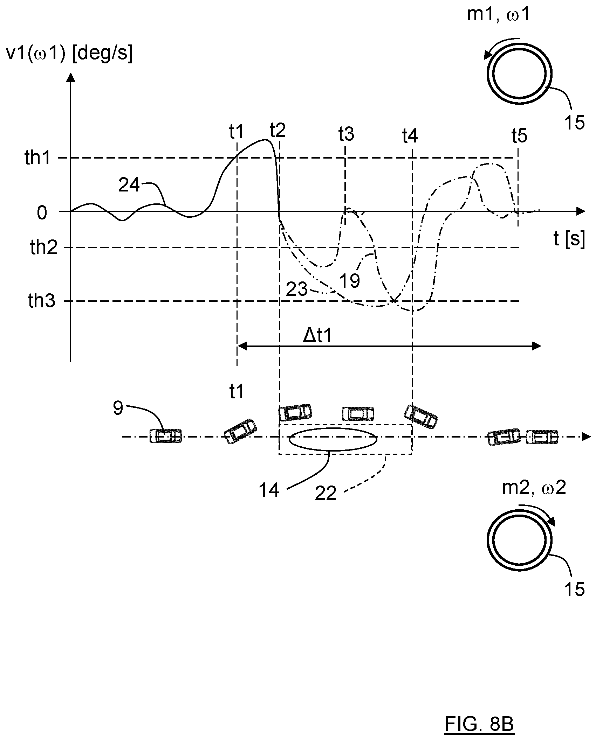

A number of examples of paths is illustrated in Figure 8A and Figure 8B, showing steering wheel angular velocity versus time. Figure 8A and Figure 8B show the ego vehicle 9 following an initial general path 24 including the start of an evasive maneuver where a first time t1 occurs when the when the first angular velocity v1 exceeds the first threshold th1 and a second time t2 occurs when the first steering wheel movement m1 in the first rotational direction ω1 changes to the second steering wheel movement m2 in the second rotational direction ω2.

Hereafter a number of alternatives are shown as illustrative examples.

In Figure 8A, for the first path 18, the second angular velocity v2 increases and decreases until it reaches a zero value a third time t3. Here the first path 18 continues parallel to the obstacle 14, and the angular velocity may pass a zero value one or more times during this parallel passage, and then the second angular velocity v2 increases again, passing the second threshold th2 but not the third threshold th3.

There in an alternative first path 18', indicated with a dotted line, where the second angular velocity v2 increases and decreases but does not reach a zero value before starting to increase again.

In Figure 8B, for the second path 19, the second angular velocity v2 increases and decreases until it reaches a zero value a third time t3. At the third time t3, the second angular velocity v2 increases again, passing both the second threshold th2 and the third threshold th3.

For the third path 23, the second angular velocity v2 increases and passes both the second threshold th2 and the third threshold 3 without decreasing, which may be the case for a small obstacle 14, the evasive maneuver being relative quick.

All illustrated paths 18, 18', 19, 23 end by the second angular velocity v2 decreasing and the second steering wheel movement m2 in the second rotational direction ω2 changing to the first steering wheel movement m1 in the first rotational direction ω1, enabling the ego vehicle to resume its original course at a fifth time t5.

The above examples only illustrate some examples of evasive maneuvers, many other alternatives of course being possible. For example, the third path 23 may pass the second threshold th2 but not the third threshold th3.

The second time t2 may according to some aspects be used to indicate a start point of an obstacle extension estimation 22. An end point may for example be associated with that the second angular velocity v2 decreases after having exceeded the second threshold th2 two times within the first time span Δt1. This is exemplified at a fourth time t4 for the alternative first path 18' in Figure 18A and for the second path 19 in Figure 8B. This does not cover the case for the third path 23, and other ways to define a start point and end point of the obstacle extension estimation 22 may of course be devised. Vehicle position coordinates, such as GPS coordinates and/or vehicle size data may also be used when the obstacle extension estimation 22 is determined.

The first time span Δt1 should be set suitably such that a variety of evasive maneuvers can occur within that first time span Δt1. The first time span Δt1 may start at any suitable time, for example at the first time t1 as indicated in Figure 8A and Figure 8B. This is of course only an example.

The communication unit 5 may according to some aspects be connected via wireless link 162 to a remote server 160, which in turn may be comprised in a cloud-based resource 161 or remote network. This server 160 and network may be configured to assist the main control unit 2 in performing various operations as well as storing and evaluating issued warnings w1, w2, w3 over time, collected from different vehicle safety systems 1. Some parts of the functionality of the main control unit 2 may be comprised in a remote server 160 or cloud-based resource 161.

For this reason, the communication unit 5 may be arranged to communicate 162 with a cellular communication system 163. This communication system 163 may, e.g., be a third generation partnership program (3GPP) defined access network like the fourth generation (4G) or the fifth generation (5G) access networks. The access network may provide access to remote networks and other resources such as, e.g., the Internet 161.

The present disclosure also relates to a remote server 160 adapted to collect data from a plurality of vehicle safety systems 1 as described herein, and to determine if issued warnings w1, w2, w3 from different vehicle safety systems 1, 1' are associated with geographical positions within a common limited area 30.

As mentioned previously, this means that the issued warnings w1, w2, w3 can be collected, stored and processed at the remote server 160, and information regarding these warnings can be communicated in a certain relevant area, indicating that there is an obstacle 14 present to a certain degree of certainty. Also, information related to the obstacle extension estimation 22 and information regarding if the environment detection system 10 has determined the presence of an obstacle 14 may also be collected, stored and processed at the remote server 160 for the same reasons, such that information regarding the position and estimated extension of the obstacle also can be communicated.

The communication can for example be directed to vehicle safety systems and can also be in the form of radio broadcasts. It can furthermore be determined whether a certain path such as the second path 19 only is due to reckless/mischievous driving or that an obstacle 14 really is present by processing several issued warnings.

According to some aspects, the remote server 160 is adapted to issue an alert if two or more safety systems 1, 1' are associated with geographical positions within a common limited area 30 when issuing warnings w1, w2, w3. This means that the probability of a real obstacle 14 being present and being the cause of the issued warnings has increased. Also, if the environment detection system 10 has determined the presence of an obstacle 14, the probability of a real obstacle 14 being present and being the cause of the issued warnings has increased.

Similarly, if two or more safety systems are associated with geographical positions within the common limited area 30, or even the communicated obstacle extension estimation 22, where warnings w1, w2, w3 have been issued previously without any new warnings being issued, the probability of a real obstacle 14 having been present, or still being present, has decreased. the probability of the presence of an obstacle 14 can thus be communicated.

As mentioned previously, the communication unit 5 may according to some aspects be adapted to communicate directly with other safety systems by means of wireless communication 7 that for example may be in the form of at least one of wifi, V2V and V2X communication. The vehicle safety system 1 may be adapted to determine at least some of the information described for the remote server 160 above, such that for example the probability of the presence of an obstacle 14, the position and estimated extension of the obstacle 14 also can be communicated.

The present disclosure also relates to a vehicle 9 comprising the vehicle safety system 1 as described herein.

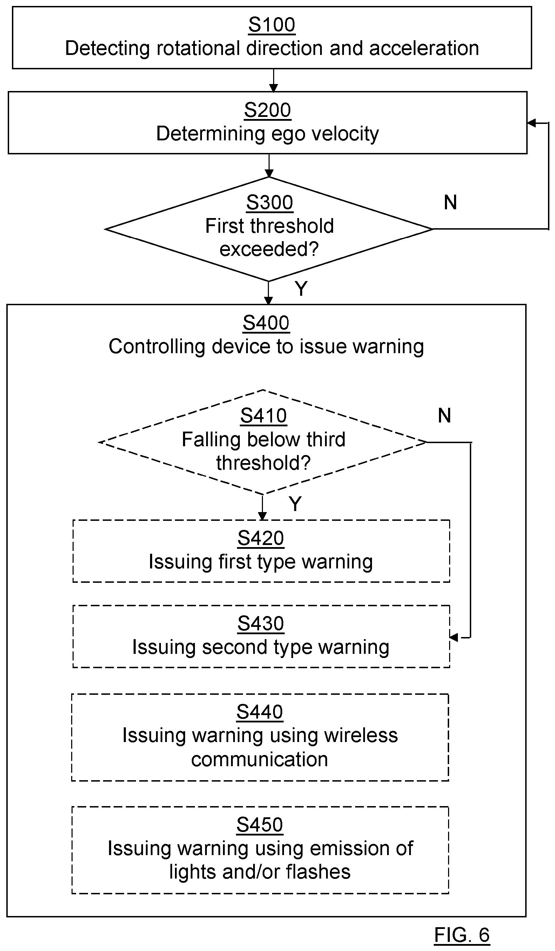

With reference to Figure 6, the present disclosure also relates to a method for a vehicle safety system 1 used in an ego vehicle 9. The method comprises detecting S100 the rotational direction ω1, ω2 and angular velocity v1, v2 of steering wheel movements 4 and determining S200 an ego velocity ve of the ego vehicle 9. The method further comprises determining S300 if a detected first angular velocity v1 of a first steering wheel movement m1 in a first rotational direction ω1 exceeds a first threshold th1 when the ego velocity ve exceeds an ego velocity threshold vth, and if that is the case, controlling S400 at least one warning device 5, 6 to issue a warning wi, w1, w2, w3, where the warning comprises at least an initial warning wi.

The method further comprises determining S410 if a detected second angular velocity v2 of a second steering wheel movement m2 in a second rotational direction ω2, that is opposite the first rotational direction ω1, exceeds a second threshold th2 and falls below a third threshold th3 within a predefined first time span Δt1. If that is the case, the method comprises controlling S420the least one warning device 5, 6 to issue a first type warning w1. Otherwise, if the detected second angular velocity v2 exceeds the third threshold th3 within the predefined first time span Δt1, the method comprises controlling S430 the least one warning device 5, 6 to issue a second type warning w2. The second steering wheel movement ω2 follows the first steering wheel movement ω1 within a predetermined time.

According to some aspects, the method further comprises issuing S440 the warning w1, w2, w3 using wireless communication 7 to at least one other vehicle 8, 11, 160.

According to some aspects, the method further comprises issuing S450 the warning using emission of lights L and/or flashes F.

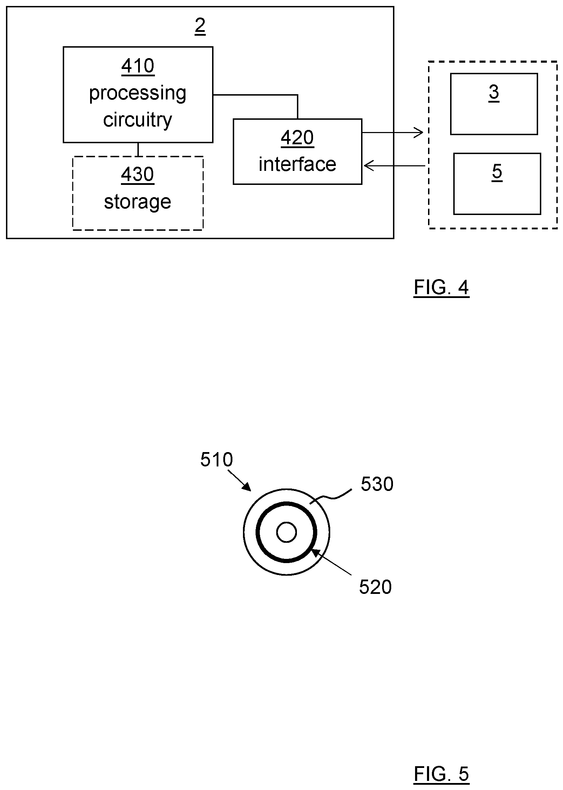

Figure 4 schematically illustrates, in terms of a number of functional units, the components of the main control unit 2 according to an embodiment. Processing circuitry 410 is provided using any combination of one or more of a suitable central processing unit (CPU), multiprocessor, microcontroller, digital signal processor (DSP), dedicated hardware accelerator, etc., capable of executing software instructions stored in a computer program product, e.g. in the form of a storage medium 430. The processing circuitry 410 may further be provided as at least one application specific integrated circuit (ASIC), or field programmable gate array (FPGA).

Particularly, the processing circuitry 410 is configured to cause the main control unit 2 to perform a set of operations, or steps. These operations, or steps, were discussed above in connection to the various radar transceivers and methods. For example, the storage medium 430 may store the set of operations, and the processing circuitry 410 may be configured to retrieve the set of operations from the storage medium 430 to cause the main control unit 2 to perform the set of operations. The set of operations may be provided as a set of executable instructions. Thus, the processing circuitry 410 is thereby arranged to execute methods and operations as herein disclosed.

The storage medium 430 may also comprise persistent storage, which, for example, can be any single one or combination of magnetic memory, optical memory, solid state memory or even remotely mounted memory.

The main control unit 2 may further comprise a communications interface 420 for communications with at least one other unit. As such, the communications interface 420 may comprise one or more transmitters and receivers, comprising analogue and digital components and a suitable number of ports for wired or wireless communication.

The processing circuitry 410 is adapted to control the general operation of the main control unit 2 e.g. by sending data and control signals to the external unit and the storage medium 430, by receiving data and reports from the external unit, and by retrieving data and instructions from the storage medium 430. Other components, as well as the related functionality, of the main control unit 2 are omitted in order not to obscure the concepts presented herein.

Figure 5 shows a computer program product 510 comprising computer executable instructions 520 arranged on a computer readable medium 530 to execute any of the methods disclosed herein.

The present disclosure also relates to a main control unit 2 adapted to perform the methods as described herein.

The present disclosure is not limited to the examples described above, but may vary freely within the scope of the appended claims. For example, determining that an angular velocity of steering wheel movements exceeds a threshold can be performed in many ways, for example by means of analyzing the variance of detected steering angles over a moving time window.

It should be known that other sensor input can be used in order to determine which type of warning that is to be issued, for example accelerometer sensors, map/lane matching sensors, turning signal sensors as well as at least one of brake, clutch and accelerator pedal movement sensors. Suitably, one or more of these sensors are connected to the main control unit 2 in order to enable the corresponding sensor input to be used to determine which type of warning that is to be issued.

## Claims

1. A vehicle safety system (1) adapted to be mounted to an ego vehicle (9), where the vehicle safety system (1) comprises a main control unit (2) and a steering angle sensor (3) connected to the main control unit (2), where the steering angle sensor (3) is adapted to detect the rotational direction (ω1, ω2) and angular velocity (v1, v2) of steering wheel movements (4), where the main control unit (2) is adapted to determine an ego velocity (ve) of the ego vehicle (9), and to determine if a detected first angular velocity (v1) of a first steering wheel movement (m1) in a first rotational direction (ω1) exceeds a first threshold (th1) when the ego velocity (ve) exceeds an ego velocity threshold (vth), and if that is the case, the main control unit (2) is adapted to control at least one warning device (5, 6) to issue a warning (wi, w1, w2, w3) , where the warning comprises at least an initial warning (wi), **characterized in that** the main control unit (2) is adapted to determine if a detected second angular velocity (v2) of a second steering wheel movement (m2) in a second rotational direction (ω)2), that is opposite the first rotational direction (ω1), exceeds a second threshold (th2) and falls below a third threshold (th3) within a predefined first time span (Δt1), and if that is the case, to control said warning device (5, 6) to issue a first type warning (w1), and if the detected second angular velocity (v2) exceeds the third threshold (th3) within the first time span (Δt1), the main control unit (2) is adapted to control the least one warning device (5, 6) to issue a second type warning (w2), where the second steering wheel movement (ω2) follows the first steering wheel movement (ω1) within a predetermined time.

2. The vehicle safety system (1) according to claim 1, further comprising a communication unit (5), where the main control unit (2) is adapted to control the communication unit (5) to issue the warning (wi, w1, w2, w3) by means of wireless communication (7) to at least one other vehicle (8, 11).

3. The vehicle safety system (1) according to claim 2, wherein the vehicle safety system (1) comprises a navigation system (12) adapted to determine a geographical position of the vehicle safety system (1), where the communication unit (5) is adapted to communicate issued warnings (wi, w1, w2, w3) and the present determined geographical position to a remote server (160) via a wireless link (162).

4. The vehicle safety system (1) according to any one of the previous claims, wherein the main control unit (2) is adapted to control ego vehicle lights (6) to issue the warning (wi, w1, w2) by means of emission of lights (L) and/or flashes (F).

5. The vehicle safety system (1) according to any one of the previous claims, wherein the vehicle safety system (1) comprises at least one environment detection system (10) that is adapted to provide input to the main control unit (2), and if said input is indicative of an approaching vehicle (11) in an adjacent lane, the main control unit (2) is adapted to control at least one warning device (5, 6) to issue a third type warning (w3).

6. A vehicle (9) comprising the vehicle safety system (1) according to any one of the previous claims.

7. A remote server (160) adapted to collect data from a plurality of vehicle safety systems (1) according to claim 3, and to determine if issued warnings (w1, w2, w3) from different vehicle safety systems (1, 1') are associated with geographical positions within a common limited area.

8. The remote server (160) according to claim 7, wherein the remote server (160) is adapted to issue an alert if two or more safety systems (1, 1') are associated with geographical positions within a common limited area when issuing warnings (w1, w2, w3).

9. A method for a vehicle safety system (1) for an ego vehicle (9), where the method comprises
detecting (S100) the rotational direction (ω1, ω2) and angular velocity (v1, v2) of steering wheel movements (4);
determining (S200) an ego velocity (ve) of the ego vehicle (9),
determining (S300) if a detected first angular velocity (v1) of a first steering wheel movement (m1) in a first rotational direction (ω1) exceeds a first threshold (th1) when the ego velocity (ve) exceeds an ego velocity threshold (vth);
and if that is the case,
controlling (S400) at least one warning device (5, 6) to issue a warning (wi, w1, w2, w3), where the warning comprises at least an initial warning (wi)
**characterized in that** the method comprises
determining (S410) if a detected second angular velocity (v2) of a second steering wheel movement (m2) in a second rotational direction(ω2), that is opposite the first rotational direction (ω1), exceeds a second threshold (th2) and falls below a third threshold (th3) within a predefined first time span (Δt1);
and if that is the case,
controlling (S420) the least one warning device (5, 6) to issue a first type warning (w1); otherwise, if the detected second angular velocity (v2) exceeds the third threshold (th3) within the predefined first time span (Δt1);
controlling (S430) the least one warning device (5, 6) to issue a second type warning (w2), where the second steering wheel movement (ω2) follows the first steering wheel movement (ω1) within a predetermined time.

10. The method according to claim 9, further comprising issuing (S440) the warning (w1, w2, w3) using wireless communication (7) to at least one other vehicle (8, 11, 160).

11. The method according to any one of the claims 9 or 10, further comprising issuing (S450) warning using emission of lights (L) and/or flashes (F).

## Patentansprüche

1. Fahrzeugsicherheitssystem (1), das geeignet ist, um an einem Ego-Fahrzeug (9) befestigt zu werden, wobei das Fahrzeugsicherheitssystem (1) eine Hauptsteuereinheit (2) und einen Lenkwinkelsensor (3) umfasst, der mit der Hauptsteuereinheit (2) verbunden ist, wobei der Lenkwinkelsensor (3) geeignet ist, um die Drehrichtung (ω1, ω2) und Winkelgeschwindigkeit (v1, v2) von Lenkradbewegungen (4) zu erfassen, wobei die Hauptsteuereinheit (2) geeignet ist, um eine Ego-Geschwindigkeit (ve) des Ego-Fahrzeugs (9) zu bestimmen, und um zu bestimmen, ob eine erfasste erste Winkelgeschwindigkeit (v1) einer ersten Lenkradbewegung (ml) in einer ersten Drehrichtung (ω1) einen ersten Schwellenwert (th1) überschreitet, wenn die Ego-Geschwindigkeit (ve) einen Ego-Geschwindigkeitsschwellenwert (vth) überschreitet, und falls dies der Fall ist, die Hauptsteuereinheit (2) geeignet ist, um mindestens eine Warnvorrichtung (5, 6) zu steuern, um eine Warnung (wi, w1, w2, w3) auszugeben, wobei die Warnung mindestens eine erste Warnung (wi) umfasst, **dadurch gekennzeichnet, dass**
die Hauptsteuereinheit (2) geeignet ist, um zu bestimmen, ob eine erfasste zweite Winkelgeschwindigkeit (v2) einer zweiten Lenkradbewegung (m2) in einer zweiten Drehrichtung (w2), die der ersten Drehrichtung (ω1) entgegengesetzt ist, einen zweiten Schwellenwert (th2) überschreitet und einen dritten Schwellenwert (th3) innerhalb einer vordefinierten ersten Zeitspanne (Δt1) unterschreitet, und falls dies der Fall ist, um die Warnvorrichtung (5, 6) zu steuern, um eine Warnung erster Art (w1) auszugeben, und falls die erfasste zweite Winkelgeschwindigkeit (v2) den dritten Schwellenwert (th3) innerhalb der ersten Zeitspanne (Δt1) überschreitet, die Hauptsteuereinheit (2) geeignet ist, um die mindestens eine Warnvorrichtung (5, 6) zu steuern, um eine Warnung zweiter Art (w2) auszugeben, wobei die zweite Lenkradbewegung (ω2) innerhalb einer vorbestimmten Zeit auf die erste Lenkradbewegung (ω1) folgt.

2. Fahrzeugsicherheitssystem (1) nach Anspruch 1, ferner umfassend eine Kommunikationseinheit (5), wobei die Hauptsteuereinheit (2) geeignet ist, um die Kommunikationseinheit (5) zu steuern, um die Warnung (wi, w1, w2, w3) mittels drahtloser Kommunikation (7) an mindestens ein anderes Fahrzeug (8, 11) auszugeben.

3. Fahrzeugsicherheitssystem (1) nach Anspruch 2, wobei das Fahrzeugsicherheitssystem (1) ein Navigationssystem (12) umfasst, das geeignet ist, um eine geographische Position des Fahrzeugsicherheitssystems (1)zu bestimmen, wobei die Kommunikationseinheit (5) geeignet ist, um ausgegebene Warnungen (wi, w1, w2, w3) und die gegenwärtig bestimmte geographische Position über eine drahtlose Verbindung (162) an einen Fernserver (160) zu kommunizieren.

4. Fahrzeugsicherheitssystem (1) nach einem der vorstehenden Ansprüche, wobei die Hauptsteuereinheit (2) geeignet ist, um die Ego-Fahrzeugbeleuchtung (6) zu steuern, um die Warnung (wi, w1, w2) mittels Emission von Lichtern (L) und/oder Blitzen (F) auszugeben.

5. Fahrzeugsicherheitssystem (1) nach einem der vorstehenden Ansprüche, wobei das Fahrzeugsicherheitssystem (1) mindestens ein Umgebungserfassungssystem (10) umfasst, das geeignet ist, um der Hauptsteuereinheit (2) eine Eingabe bereitzustellen, und die Hauptsteuereinheit (2) geeignet ist, um mindestens eine Warnvorrichtung (5, 6) zu steuern, um eine Warnung dritter Art (w3) auszugeben, falls die Eingabe auf ein sich näherndes Fahrzeug (11) in einer benachbarten Spur hinweist.

6. Fahrzeug (9), umfassend das Fahrzeugsicherheitssystem (1) nach einem der vorstehenden Ansprüche.

7. Fernserver (160), der geeignet ist, um Daten von einer Vielzahl von Fahrzeugsicherheitssystemen (1) nach Anspruch 3 zu sammeln und um zu bestimmen, ob ausgegebene Warnungen (w1, w2, w3) von verschiedenen Fahrzeugsicherheitssystemen (1, 1') mit geographischen Positionen innerhalb eines gemeinsamen begrenzten Bereichs verbunden sind.

8. Fernserver (160) nach Anspruch 7, wobei der Fernserver (160) geeignet ist, um eine Warnung auszugeben, falls zwei oder mehr Sicherheitssysteme (1, 1') bei dem Ausgeben von Warnungen (w1, w2, w3) mit geographischen Positionen innerhalb eines gemeinsamen begrenzten Bereichs verbunden sind.

9. Verfahren für ein Fahrzeugsicherheitssystem (1) für ein Ego-Fahrzeug (9), wobei das Verfahren umfasst
Erfassen (S100) der Drehrichtung (ω1, ω2) und Winkelgeschwindigkeit (v1, v2) von Lenkradbewegungen (4);
Bestimmen (S200) einer Ego-Geschwindigkeit (ve) des Ego-Fahrzeugs (9),
Bestimmen (S300), ob eine erfasste erste Winkelgeschwindigkeit (v1) einer ersten Lenkradbewegung (m1) in einer ersten Drehrichtung (ω1) einen ersten Schwellenwert (th1) überschreitet, wenn die Ego-Geschwindigkeit (ve) einen Ego-Geschwindigkeitsschwellenwert (vth) überschreitet;
und falls das der Fall ist,
Steuern (S400) mindestens einer Warnvorrichtung (5, 6), um eine Warnung (wi, w1, w2, w3) auszugeben, wobei die Warnung mindestens eine erste Warnung (wi) umfasst,
**dadurch gekennzeichnet, dass** das Verfahren umfasst
Bestimmen (S410), ob eine erfasste zweite Winkelgeschwindigkeit (v2) einer zweiten Lenkradbewegung (m2) in einer zweiten Drehrichtung (w2), die der ersten Drehrichtung (ω1) entgegengesetzt ist, einen zweiten Schwellenwert (th2) überschreitet und einen dritten Schwellenwert (th3) innerhalb einer vordefinierten ersten Zeitspanne (Δt1) unterschreitet;
und falls das der Fall ist,
Steuern (S420) der mindestens einen Warnvorrichtung (5, 6), um eine Warnung erster Art (ω1) auszugeben; andernfalls, falls die erfasste zweite Winkelgeschwindigkeit (v2) den dritten Schwellenwert (th3) innerhalb der vordefinierten ersten Zeitspanne (Δt1) überschreitet;
steuern (S430) der mindestens einen Warnvorrichtung (5, 6), um eine Warnung zweiter Art (w2) auszugeben, wobei die zweite Lenkradbewegung (w2) innerhalb einer vorbestimmten Zeit auf die erste Lenkradbewegung (ω1) folgt.

10. Verfahren nach Anspruch 9, ferner umfassend
Ausgeben (S440) der Warnung (w1, w2, w3) unter Verwendung drahtloser Kommunikation (7) an mindestens ein anderes Fahrzeug (8, 11, 160).

11. Verfahren nach einem der Ansprüche 9 oder 10, ferner umfassend das Ausgeben (S450) einer Warnung unter Verwendung der Emission von Lichtern (L) und/oder Blitzen (F).

## Revendications

1. Système de sécurité de véhicule (1) adapté pour être monté sur un égo véhicule (9), où le système de sécurité de véhicule (1) comprend une unité de commande principale (2) et un capteur d'angle de direction (3) connecté à l'unité de commande principale (2), où le capteur d'angle de direction (3) est adapté pour détecter le sens de rotation (ω1, ω2) et la vitesse angulaire (v1, v2) de mouvements de volant de direction (4), où l'unité de commande principale (2) est adaptée à déterminer une vitesse d'égo (ve) de l'égo véhicule (9), et à déterminer si une première vitesse angulaire (v1) détectée d'un premier mouvement de volant de direction (m1) dans un premier sens de rotation (ω1) dépasse un premier seuil (th1) lorsque la vitesse d'égo (ve) dépasse un seuil de vitesse d'égo (vth), et si tel est le cas, l'unité de commande principale (2) est adaptée pour commander au moins un dispositif d'avertissement (5, 6) afin qu'il émette un avertissement (wi, w1, w2, w3), où l'avertissement comprend au moins un avertissement initial (wi), **caractérisé en ce que**
l'unité de commande principale (2) est adaptée pour déterminer si une seconde vitesse angulaire (v2) détectée d'un second mouvement de volant de direction (m2) dans un second sens de rotation (w2), qui est opposé au premier sens de rotation (ω1), dépasse un deuxième seuil (th2) et tombe en dessous d'un troisième seuil (th3) au sein d'un premier laps de temps prédéfini (Δt1), et si tel est le cas, pour commander ledit dispositif d'avertissement (5, 6) afin qu'il émette un avertissement de premier type (w1), et si la seconde vitesse angulaire (v2) détectée dépasse le troisième seuil (th3) au sein du premier laps de temps (Δt1), l'unité de commande principale (2) est adaptée pour commander l'au moins un dispositif d'avertissement (5, 6) pour qu'il émette un avertissement de deuxième type (w2), où le second mouvement de volant de direction (ω2) suit le premier mouvement de volant de direction (ω1) au sein d'un temps prédéterminé.

2. Système de sécurité de véhicule (1) selon la revendication 1, comprenant en outre une unité de communication (5), où l'unité de commande principale (2) est adaptée pour commander l'unité de communication (5) afin qu'elle émette l'avertissement (wi, w1, w2, w3) au moyen d'une communication sans fil (7) à au moins un autre véhicule (8, 11).

3. Système de sécurité de véhicule (1) selon la revendication 2, dans lequel le système de sécurité de véhicule (1) comprend un système de navigation (12) adapté pour déterminer une position géographique du système de sécurité de véhicule (1), où l'unité de communication (5) est adaptée pour communiquer des avertissements (wi, w1, w2, w3) émis et la position géographique déterminée actuelle à un serveur distant (160) par l'intermédiaire d'une liaison sans fil (162).

4. Système de sécurité de véhicule (1) selon l'une quelconque des revendications précédentes, dans lequel l'unité de commande principale (2) est adaptée pour commander les feux d'égo véhicule (6) pour qu'ils émettent l'avertissement (wi, w1, w2) au moyen de l'émission de feux (L) et/ou de feux clignotants (F).

5. Système de sécurité de véhicule (1) selon l'une quelconque des revendications précédentes, dans lequel le système de sécurité de véhicule (1) comprend au moins un système de détection d'environnement (10) qui est adapté pour fournir une entrée à l'unité de commande principale (2), et si ladite entrée indique un véhicule (11) approchant dans une voie adjacente, l'unité de commande principale (2) est adaptée pour commander au moins un dispositif d'avertissement (5, 6) pour qu'il émette un avertissement de troisième type (w3).

6. Véhicule (9) comprenant le système de sécurité de véhicule (1) selon l'une quelconque des revendications précédentes.

7. Serveur distant (160) adapté pour collecter des données d'une pluralité de systèmes de sécurité de véhicule (1) selon la revendication 3, et pour déterminer si des avertissements (w1, w2, w3) émis par différents systèmes de sécurité de véhicule (1, 1') sont associés à des positions géographiques au sein d'une zone limitée commune.

8. Serveur distant (160) selon la revendication 7, dans lequel le serveur distant (160) est adapté pour émettre une alerte si deux systèmes de sécurité (1, 1') ou plus sont associés à des positions géographiques au sein d'une zone limitée commune lors de l'émission d'avertissements (w1, w2, w3).

9. Procédé pour un système de sécurité de véhicule (1) pour un égo véhicule (9), où le procédé comprend
la détection (S100) du sens de rotation (ω1, ω2) et de la vitesse angulaire (v1, v2) de mouvements de volant de direction (4) ;
la détermination (S200) d'une vitesse d'égo (ve) de l'égo véhicule (9),
la détermination (S300) de si une première vitesse angulaire (v1) détectée d'un premier mouvement de volant de direction (m1) dans un premier sens de rotation (ω1) dépasse un premier seuil (th1) lorsque la vitesse d'égo (ve) dépasse un seuil de vitesse d'égo (vth) ;
et si tel est le cas,
la commande (S400) d'au moins un dispositif d'avertissement (5, 6) pour qu'il émette un avertissement (wi, w1, w2, w3), où l'avertissement comprend au moins un avertissement initial (wi)
**caractérisé en ce que** le procédé comprend
la détermination (S410) de si une seconde vitesse angulaire (v2) détectée d'un second mouvement de volant de direction (m2) dans un second sens de rotation (w2), qui est opposé au premier sens de rotation (w1), dépasse un deuxième seuil (th2) et tombe en dessous d'un troisième seuil (th3) au sein d'un premier laps de temps prédéfini (Δt1) ;
et si tel est le cas,
la commande (S420) de l'au moins un dispositif d'avertissement (5, 6) pour qu'il émette un avertissement de premier type (w1) ; sinon, si la seconde vitesse angulaire (v2) détectée dépasse le troisième seuil (th3) au sein du premier laps de temps prédéfini (Δt1);
la commande (S430) de l'au moins un dispositif d'avertissement (5, 6) pour qu'il émette un avertissement de deuxième type (w2), où le second mouvement de volant de direction (ω2) suit le premier mouvement de volant de direction (ω1) au sein d'un temps prédéterminé.

10. Procédé selon la revendication 9, comprenant en outre l'émission (S440) de l'avertissement (w1, w2, w3) à l'aide d'une communication sans fil (7) à au moins un autre véhicule (8, 11, 160).

11. Procédé selon l'une quelconque des revendications 9 ou 10, comprenant en outre l'émission (S450) d'un avertissement à l'aide de l'émission de feux (L) et/ou de feux clignotants (F).
